# EUROPÄISCHE PATENTANMELDUNG

(11) **EP 4 099 045 A2**
(43) Veröffentlichungstag der Anmeldung: **07.12.2022**
(21) Anmeldenummer: 22173650.7
(22) Anmeldetag: 16.05.2022
(51) Int. Cl.: G01S 7/03, G01S 13/82, G01S 13/84, H01P 5/18, H01Q 3/26

(54) **EINE DIPLEXER-SCHALTUNG, EIN HARMONISCHER TRANSPONDER, EIN RETRODIREKTIVES SYSTEM UND EIN SYSTEM**

(30) Priorität: 02.06.2021 DE 102021114277
(71) Anmelder: Fraunhofer-Gesellschaft zur Förderung der angewandten Forschung e.V., 80686 München (DE)
(72) Erfinder: HANSEN, Steffen, 53343 Wachtberg (DE); POHL, Nils, 53343 Wachtberg (DE)
(74) Vertreter: 2SPL Patentanwälte PartG mbB

(57) **Zusammenfassung**

Ein Ausführungsbeispiel einer Diplexer-Schaltung 100 umfasst einen 180°-Hybridkoppler 105 mit einem ersten Anschluss 101 zum Übertragen eines Signals mit einer Grundfrequenz. Die Diplexer-Schaltung 100 umfasst zumindest eine erste Struktur 106, die an einen zweiten Anschluss 102 des 180°-Hybridkopplers 105 gekoppelt ist. Das Signal mit der Grundfrequenz erfährt nach Passieren der zumindest ersten Struktur 106 effektiv eine im Wesentlichen 45°-Phasenverschiebung. Die Diplexer-Schaltung 100 umfasst ferner zumindest eine erste Stichleitung 108, die der ersten Struktur 106 nachgeschaltet ist. Das Signal mit der Grundfrequenz erfährt nach Passieren der ersten Stichleitung 108 effektiv eine im Wesentlichen 90°-Phasenverschiebung.

## Beschreibung

### Technisches Gebiet

Ausführungsbeispiele befassen sich mit Diplexer-Schaltungen, harmonischen Transpondern, retrodirektiven Systemen und Systemen.

### Hintergrund

Harmonische Radarsysteme können verwendet werden, um in Umgebungen mit Störsignalen Entfernungen von Zielobjekten genauer bestimmen zu können. Für harmonische Radarsysteme werden die Zielobjekte mit einem harmonischen Transponder (engl. Tag) ausgestattet, der ein Radarsignal, z.B. mit der Grundfrequenz, empfangen und ein Signal mit einer harmonischen Frequenz, z.B. der doppelten Grundfrequenz, als Antwort an den Reader zurücksenden kann.

Harmonische Transponder weisen in der Regel eine Empfangsantenne zum Empfangen des Radarsignals, eine Schaltung für die Frequenzverdopplung, und eine Sendeantenne zum Aussenden des Signals mit der doppelten Frequenz auf. Die Sende- und Empfangsantenne sind in der Regel räumlich getrennt angeordnet (bistatische harmonische Transponder).

Aufgrund der getrennten Anordnung der Antennen ist die Genauigkeit für bistatische Transponder oftmals beschränkt. Es können bei der Entfernungsbestimmung Fehler auftreten, die abhängig von der relativen Orientierung des Transponders in Bezug auf den Reader sind. Da die Orientierung des Transponders zum Reader oftmals nicht bekannt ist, können orientierungsabhängige Fehler häufig nicht einfach bestimmt und korrigiert werden.

### Zusammenfassung

Vor diesem Hintergrund besteht ein Bedarf ein besseres Konzept für harmonische Schaltungen, harmonische Transponder und/oder harmonische Radarsysteme bereitzustellen.

Dieser Bedarf kann von den in den unabhängigen Patentansprüchen definierten Gegenständen gedeckt werden.

Einige Ausführungsbeispiele beziehen sich auf Diplexer-Schaltungen. Die Diplexer-Schaltung umfasst einen 180°-Hybridkoppler mit einem ersten Anschluss zum Übertragen eines Signals mit einer Grundfrequenz. Die Diplexer-Schaltung umfasst ferner zumindest eine erste Struktur, die an einen zweiten Anschluss des 180°-Hybridkopplers gekoppelt ist. Das Signal mit der Grundfrequenz erfährt nach Passieren der zumindest ersten Struktur effektiv eine im Wesentlichen 45°-Phasenverschiebung. Die Diplexer-Schaltung umfasst ferner zumindest eine erste Stichleitung, die der ersten Struktur nachgeschaltet ist. Das Signal mit der Grundfrequenz erfährt nach Passieren der ersten Stichleitung effektiv eine im Wesentlichen 90°-Phasenverschiebung. Die zumindest erste Struktur und die zumindest erste Stichleitung können für das Signal der Grundfrequenz und den Harmonischen unterschiedliche Phasenverzögerungen bewirken und abhängig von der Frequenz offene oder kurzgeschlossene Leitungsabschnitte ermöglichen. Dadurch kann die Diplexer-Schaltung als Frequenzweiche z.B. für die Grundfrequenz und die doppelte Grundfrequenz (2. Harmonische) dienen. Die Diplexer-Schaltung kann das Signal mit der Grundfrequenz und das Signal mit der doppelten Grundfrequenz über den ersten Anschluss übertragen. Zum Beispiel kann das Signal mit der Grundfrequenz über den ersten Anschluss empfangen und das Signal mit der doppelten Grundfrequenz ebenfalls über den ersten Anschluss gesendet werden. Die Diplexer-Schaltung kann eine Schaltung für einen monostatischen harmonischen Transponder mit gemeinsamer Empfangs- und Sendeantenne sein.

In manchen Ausführungsbeispielen sind der erste Anschluss und der zweite Anschluss benachbart und das Signal mit der Grundfrequenz zwischen dem ersten Anschluss und dem zweiten Anschluss erfährt eine im Wesentlichen 90°-Phasenverschiebung. Das Signal mit der Grundfrequenz kann zwischen dem ersten und zweiten Anschluss eine im Wesentlichen 90°-Phasenverschiebung und das Signal mit der doppelten Grundfrequenz kann zwischen dem ersten und zweiten Anschluss eine im Wesentlichen 180°-Phasenverschiebung erfahren.

In manchen Ausführungsbeispielen weist der 180°-Hybridkoppler einen dritten Anschluss zum Übertragen eines Signals mit einer im Wesentlichen doppelten Grundfrequenz auf. Für die Grundfrequenz kann der dritte Anschluss entkoppelt sein, da sich Signale mit der Grundfrequenz, die über verschiedene Zweige im 180°-Hybridkoppler zum dritten Anschluss übertragen werden, sich destruktiv überlagern können. Der dritte Anschluss kann das Signal mit der doppelten Grundfrequenz übertragen. Zum Beispiel kann das Signal mit der doppelten Grundfrequenz vom dritten Anschluss empfangen werden und über den 180°-Hybridkoppler den ersten Anschluss erreichen.

In manchen Ausführungsbeispielen sind der zweite Anschluss und der dritte Anschluss benachbart und das Signal mit der Grundfrequenz zwischen dem ersten Anschluss und dem dritten Anschluss erfährt eine im Wesentlichen 180°-Phasenverschiebung. Das Signal mit der Grundfrequenz kann zwischen dem ersten und dritten Anschluss eine im Wesentlichen 180°-Phasenverschiebung und das Signal mit der doppelten Grundfrequenz kann zwischen dem ersten und dritten Anschluss eine im Wesentlichen 360°-Phasenverschiebung erfahren.

In manchen Ausführungsbeispielen weisen die zumindest erste Stichleitung und die zumindest erste Struktur einen gemeinsamen Knoten zum Koppeln mit einem Signal mit einer im Wesentlichen doppelten Grundfrequenz auf. Das Signal mit der Grundfrequenz kann über den gemeinsamen Knoten an eine Schaltung koppeln, die basierend auf dem Signal der Grundfrequenz zum Beispiel ein Signal der doppelten Grundfrequenz generieren kann. Das Signal mit der doppelten Grundfrequenz kann die zweite Harmonische sein, die für das harmonische Radarprinzip verwendet werden kann.

In manchen Ausführungsbeispielen umfasst die Diplexer-Schaltung ferner eine zweite Struktur, die an einen vierten Anschluss des 180°-Hybridkopplers gekoppelt ist. Das Signal mit der Grundfrequenz erfährt nach Passieren der zweiten Struktur effektiv eine im Wesentlichen 45°-Phasenverschiebung. Ferner umfasst die Diplexer-Schaltung eine zweite Stichleitung, die der zweiten Struktur nachgeschaltet ist. Das Signal mit der Grundfrequenz erfährt nach Passieren der zweiten Stichleitung effektiv eine im Wesentlichen 90°-Phasenverschiebung. Die Diplexer-Schaltung kann zum Beispiel zum Teil symmetrisch implementiert sein und ein differentielles Signal zur Verfügung stellen. Das Signal mit der Grundfrequenz kann über einen anderen Zweig und den vierten Anschluss des 180°-Hybridkopplers die zweite Struktur und die zweite Stichleitung erreichen.

In manchen Ausführungsbeispielen sind der erste Anschluss und der vierte Anschluss benachbart und das Signal mit der Grundfrequenz zwischen dem ersten Anschluss und dem vierten Anschluss erfährt eine im Wesentlichen 270°-Phasenverschiebung. Das Signal mit der Grundfrequenz kann zwischen dem ersten und vierten Anschluss eine im Wesentlichen 270°-Phasenverschiebung und das Signal mit der doppelten Grundfrequenz kann zwischen dem ersten und vierten Anschluss eine im Wesentlichen 540°-Phasenverschiebung erfahren.

In manchen Ausführungsbeispielen weisen die zweite Stichleitung und die zweite Struktur einen gemeinsamen Knoten zum Koppeln mit einem Signal mit einer im Wesentlichen doppelten Grundfrequenz auf. In Bezug auf den (ersten) gemeinsamen Knoten, der an die zumindest erste Stichleitung und Struktur koppelt, kann der gemeinsame Knoten, der an die zweite Stichleitung und Struktur koppelt, ein zweiter gemeinsamer Knoten sein. Ein Teil des differentiellen Signals mit der Grundfrequenz könnte über den zweiten gemeinsamen Knoten abgegriffen und/oder z.B. mit einem zweiten Eingang der Schaltung, die über einen ersten Eingang an den ersten gemeinsamen Knoten koppelt, verbunden werden.

In manchen Ausführungsbeispielen liegt ein Ende der zumindest ersten Stichleitung auf Massepotential. Das Massepotential kann ermöglichen, dass die zumindest erste Stichleitung für das Signal der Grundfrequenz in eine offene Leitung und für das Signal der doppelten Grundfrequenz in eine kurzgeschlossene Leitung transformiert.

In manchen Ausführungsbeispielen verzweigt die zumindest erste Stichleitung in eine dritte Stichleitung und eine vierte Stichleitung. Das Signal mit der Grundfrequenz erfährt nach Passieren der dritten Stichleitung effektiv eine im Wesentlichen 90°-Phasenverschiebung und nach Passieren der vierten Stichleitung effektiv eine im Wesentlichen 45°-Phasenverschiebung. Die dritte und vierte Stichleitung kann ermöglichen, dass der Leitungsabschnitt mit der zumindest ersten Stichleitung für das Signal der Grundfrequenz in eine offene Leitung und für das Signal der doppelten Grundfrequenz in eine kurzgeschlossene Leitung transformiert. Im Vergleich zum Massepotential am Ende der zumindest ersten Stichleitung könnte die Verschaltung mit der dritten und vierten Stichleitung für höhere Grundfrequenzen technisch einfacher implementiert werden.

Einige Ausführungsbeispiele beziehen sich auf harmonische Transponder. Der harmonische Transponder umfasst eine Diplexer-Schaltung gemäß dem vorgeschlagenen Konzept mit dem ersten Anschluss zum Empfangen des Signals mit der Grundfrequenz und zum Senden eines Signals mit der im Wesentlichen doppelten Grundfrequenz. Der harmonische Transponder kann mittels der Diplexer-Schaltung ein monostatischer Transponder sein, der über den ersten Anschluss das Signal der Grundfrequenz empfangen und das Signal der doppelten Grundfrequenz senden kann. Im Vergleich zu einem bistatischen harmonischen Transponder kann eine Entfernungsbestimmung gemäß dem harmonischen Radarprinzip genauer und unabhängig von der Orientierung des Transponders zum Reader erfolgen.

In manchen Ausführungsbeispielen umfasst der harmonische Transponder ferner einen Frequenzverdoppler, der zumindest über den gemeinsamen Knoten an der zumindest ersten Struktur das Signal mit der Grundfrequenz empfängt und basierend auf dem Signal mit der Grundfrequenz das Signal mit der im Wesentlichen doppelten Grundfrequenz generiert. Der Frequenzverdoppler kann basierend auf dem empfangenen Signal mit der Grundfrequenz das zu sendende Signal mit der doppelten Grundfrequenz erzeugen. Das Signal mit der Grundfrequenz kann über den ersten (und optional über den zweiten) gemeinsamen Knoten zum Frequenzverdoppler übertragen werden.

In manchen Ausführungsbeispielen koppelt ein Ausgang des Frequenzverdopplers an den dritten Anschluss der Diplexer-Schaltung. Das zu sendende Signal mit der doppelten Grundfrequenz, welches von Frequenzverdoppler erzeugt wurde, kann über den dritten Anschluss an den 180°-Hybridkoppler zurückgeführt werden. Gemäß dem vorgeschlagenen Konzept der Diplexer-Schaltung kann das zurückgeführte Signal mit der doppelten Grundfrequenz vom dritten Anschluss über die beiden Zweige des 180°-Hybridkopplers ohne oder mit wenig Leistungsverlust zum ersten Anschluss übertragen werden. Am ersten Anschluss können sich die über den ersten und zweiten Zweig übertragenen Signale konstruktiv überlagern. Das am ersten Anschluss anliegende (verstärkte) Signal kann über eine Antenne des harmonischen Transponders gesendet werden.

Einige Ausführungsbeispiele beziehen sich auf retrodirektive Systeme. Das retrodirektive System umfasst zumindest einen ersten harmonischen Transponder gemäß dem vorgeschlagenen Konzept mit erster Diplexer-Schaltung und erstem Frequenzverdoppler und zumindest einen zweiten harmonischen Transponder gemäß dem vorgeschlagenen Konzept mit zweiter Diplexer-Schaltung und zweitem Frequenzverdoppler. Das retrodirektive System kann zumindest zwei harmonische Transponder aufweisen, die ein Netzwerk bilden können, um ein Signal mit der doppelten Grundfrequenz entgegengesetzt zur Empfangsrichtung zu senden.

Im Vergleich zu Systemen ohne Retroreflektoren kann das retrodirektive System verwendet werden, um ein stärkeres Radarziel zu ermöglichen.

In manchen Ausführungsbeispielen koppelt ein Ausgang des ersten Frequenzverdopplers an den dritten Anschluss der zweiten Diplexer-Schaltung und ein Ausgang des zweiten Frequenzverdopplers an den dritten Anschluss der ersten Diplexer-Schaltung. Diese Kopplungsweise zwischen dem ersten und zweiten harmonischen Transponder kann ermöglichen, dass das retrodirektive System nach dem Konzept eines Van-Atta-Array Netzwerks betrieben werden kann.

In manchen Ausführungsbeispielen umfasst das retrodirektive Systemferner einen dritten und vierten harmonischen Transponder jeweils gemäß dem vorgeschlagenen Konzept. Die harmonischen Transponder des retrodirektiven Systems weisen ein gemeinsames Zentrum auf, wobei bezüglich des Zentrums gegenüberliegend angeordnete harmonische Transponder über eine gleiche Länge gekoppelt sind. Das retrodirektive System kann vier harmonische Transponder aufweisen, die derart miteinander gekoppelt sind, dass das retrodirektive System nach dem Konzept eines Van-Atta-Array Netzwerks betrieben werden kann. Die retrodirektive Eigenschaft des Systems kann durch eine gleiche Phasenverzögerung für jedes gekoppelte Paar erreicht werden. Mit vier oder mehr harmonischen Transpondern kann ein retrodirektives System mit einem größeren Rückstreuquerschnitt erzielt werden.

In manchen Ausführungsbeispielen koppelt jeweils ein Ausgang eines jeden Frequenzverdopplers an den dritten Anschluss der diagonal gegenüberliegend angeordneten Diplexer-Schaltung. Zum Beispiel könnten die vier harmonischen Transponder auf einer gemeinsamen Ebene angeordnet sein. Durch die Kopplung von gegenüberliegend angeordneten Diplexer-Schaltungen kann die retrodirektive Eigenschaft für zwei Dimensionen erzielt werden.

Einige Ausführungsbeispiele beziehen sich auf Systeme, die eine Mehrzahl von retrodirektiven Systemen gemäß dem vorgeschlagenen Konzept umfassen. Das gemeinsame Zentrum der jeweils retrodirektiven Systeme ist ein gemeinsames Zentrum der Mehrzahl von retrodirektiven Systemen. Das System kann ein Netzwerk aus retrodirektiven Systemen sein und im Vergleich zu einem einzelnen retrodirektiven System einen größeren Rückstreuquerschnitt aufweisen. Zum Beispiel kann das System vier retrodirektive Systeme aufweisen, die ausgehend von dem gemeinsamen Zentrum der Mehrzahl von retrodirektiven Systemen mit gleichen Längen gekoppelt sein können. Das System könnte eindimensional oder zweidimensional angeordnete harmonische Transponder aufweisen.

In manchen Ausführungsbeispielen sind die harmonischen Transponder des Systems auf einem gemeinsamen Träger implementiert. Die Diplexer-Schaltungen und die Schaltungen für die Frequenzverdopplung können auf einem Träger, wie z.B. Leiterplatte oder Substrat, kompakt implementiert werden.

### Figurenkurzbeschreibung

Einige Beispiele von Vorrichtungen und/oder Verfahren werden nachfolgend bezugnehmend auf die beiliegenden Figuren lediglich beispielhaft näher erläutert. Es zeigen:
Fig. 1 ein Ausführungsbeispiel einer Diplexer-Schaltung;
Fig. 2a ein weiteres Ausführungsbeispiel einer Diplexer-Schaltung;
Fig. 2b-c ein Beispiel für eine vereinfachte Darstellung der in Fig. 2a dargestellten Diplexer-Schaltung für die Grundfrequenz;
Fig. 2c ein Beispiel für eine vereinfachte Darstellung der in Fig. 2a dargestellten Diplexer-Schaltung für die im Wesentlichen doppelte Grundfrequenz;
Fig. 3 ein weiteres Ausführungsbeispiel einer Diplexer-Schaltung;
Fig. 4 ein Ausführungsbeispiel eines harmonischen Transponders;
Fig. 5 ein Ausführungsbeispiel eines retrodirektiven Systems;
Fig. 6 ein weiteres Ausführungsbeispiel eines retrodirektiven Systems;
Fig. 7 ein weiteres Ausführungsbeispiel eines retrodirektiven Systems; und
Fig. 8 ein Ausführungsbeispiel eines Systems.

### Beschreibung

Einige Beispiele werden nun ausführlicher Bezug nehmend auf die beiliegenden Figuren beschrieben. Weitere mögliche Beispiele sind jedoch nicht auf die Merkmale dieser detailliert beschriebenen Ausführungsformen beschränkt. Diese können Modifikationen der Merkmale sowie Entsprechungen und Alternativen zu den Merkmalen aufweisen. Ferner soll die Terminologie, die hierin zum Beschreiben bestimmter Beispiele verwendet wird, nicht einschränkend für weitere mögliche Beispiele sein.

Gleiche oder ähnliche Bezugszeichen beziehen sich in der gesamten Beschreibung der Figuren auf gleiche oder ähnliche Elemente beziehungsweise Merkmale, die jeweils identisch oder auch in abgewandelter Form implementiert sein können, während sie die gleiche oder eine ähnliche Funktion bereitstellen. In den Figuren können ferner die Stärken von Linien, Schichten und/oder Bereichen zur Verdeutlichung übertrieben sein.

Wenn zwei Elemente A und B unter Verwendung eines "oder" kombiniert werden, ist dies so zu verstehen, dass alle möglichen Kombinationen offenbart sind, d. h. nur A, nur B sowie A und B, sofern nicht im Einzelfall ausdrücklich anders definiert. Als alternative Formulierung für die gleichen Kombinationen kann "zumindest eines von A und B" oder "A und/oder B" verwendet werden. Das gilt Äquivalent für Kombinationen von mehr als zwei Elementen.

Wenn eine Singularform, z. B. "ein, eine" und "der, die, das" verwendet wird und die Verwendung nur eines einzelnen Elements weder explizit noch implizit als verpflichtend definiert ist, können weitere Beispiele auch mehrere Elemente verwenden, um die gleiche Funktion zu implementieren. Wenn eine Funktion im Folgenden als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei deren Gebrauch das Vorhandensein der angegebenen Merkmale, Ganzzahlen, Schritte, Operationen, Prozesse, Elemente, Komponenten und/oder einer Gruppe derselben beschreiben, dabei aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

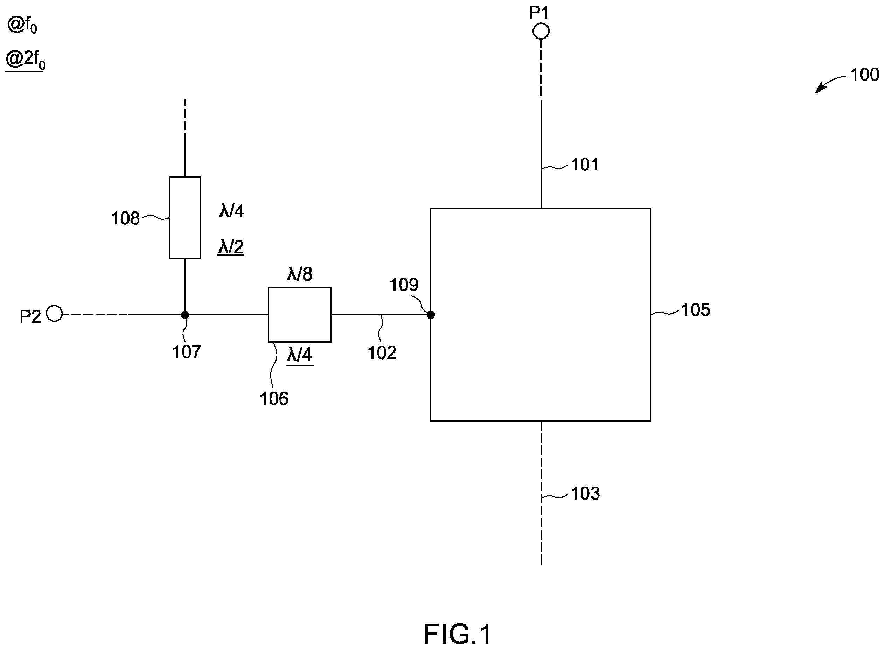

Fig. 1 zeigt ein Ausführungsbeispiel einer Diplexer-Schaltung 100. Die Diplexer-Schaltung 100 umfasst einen 180°-Hybridkoppler 105 mit einem ersten Anschluss 101 zum Übertragen eines Signals mit einer Grundfrequenz. Die Diplexer-Schaltung 100 umfasst zumindest eine erste Struktur 106, die an einen zweiten Anschluss 102 des 180°-Hybridkopplers 105 gekoppelt ist. Das Signal mit der Grundfrequenz erfährt nach Passieren der zumindest ersten Struktur 106 effektiv eine im Wesentlichen 45°-Phasenverschiebung. Die Diplexer-Schaltung 100 umfasst ferner zumindest eine erste Stichleitung 108, die der ersten Struktur 106 nachgeschaltet ist. Das Signal mit der Grundfrequenz erfährt nach Passieren der ersten Stichleitung 108 effektiv eine im Wesentlichen 90°-Phasenverschiebung.

Die Diplexer-Schaltung 100 kann zumindest mit dem Signal mit der Grundfrequenz und/oder einem Signal mit der doppelten Grundfrequenz betrieben werden. Zum Beispiel kann die Grundfrequenz im Mega-, Giga- oder Terahertz-Bereich liegen. Der 180°-Hybridkoppler 105 weist den ersten Anschluss 101 zum Übertragen des Signals mit der Grundfrequenz auf. Zum Beispiel kann der erste Anschluss 101 des 180°-Hybridkopplers 105 das Signal mit der Grundfrequenz empfangen. Alternativ oder optional könnte das Signal mit der Grundfrequenz über den ersten Anschluss 101 gesendet werden. Für ein besseres Verständnis wird im Folgenden die Diplexer-Schaltung 100 beispielhaft für ein über den ersten Anschluss 101 empfangenes Signal mit der Grundfrequenz beschrieben. Die Funktionsweise der Diplexer-Schaltung 100 ist nicht auf das genannte Beispiel beschränkt.

Phasenverzögerungen, die in der Diplexer-Schaltung für die Grundfrequenz auftreten können, sind in Fig. 1 mit Bezug auf die Wellenlänge (einfach) dargestellt. Phasenverzögerungen, die in der Diplexer-Schaltung für die im Wesentlichen doppelte Grundfrequenz auftreten können, sind in Fig. 1 mit Bezug auf die Wellenlänge mit einem Unterstrich dargestellt.

Das Signal mit der Grundfrequenz, z.B. f₀ (und der zugehörigen Wellenlänge λ), kann über den ersten Anschluss 101 in den 180°-Hybridkoppler 105 eingekoppelt werden und sich in einen ersten Zweig (erster Übertragungsweg) und einen zweiten Zweig (zweiter Übertragungsweg) aufteilen. Das in den ersten Zweig übertragene Signal mit der Grundfrequenz kann zum zweiten Anschluss 102 weitergeleitet werden und die zumindest erste Struktur 106 erreichen. Die zumindest erste Struktur 106 kann z.B. ein Leitungsabschnitt sein, dessen Länge auf die Grundfrequenz abgestimmt ist. Nach dem (einmaligen) Passieren der zumindest ersten Struktur 106 kann das Signal mit der Grundfrequenz eine Strecke, von z.B. λ/8 zurücklegen, die effektiv eine im Wesentlichen 45°-Phasenverschiebung bewirken kann. Nach Passieren der zumindest ersten Struktur 106 kann das Signal mit der Grundfrequenz die zumindest erste Stichleitung 108 erreichen. Die zumindest erste Stichleitung 108 kann zum Beispiel ein Leitungsabschnitt mit einer Länge von λ/4 sein. Ein (einmaliges) Passieren der zumindest ersten Stichleitung kann eine im Wesentlichen 90°-Phasenverschiebung für das Signal der Grundfrequenz bewirken. Für das Signal der Grundfrequenz kann die zumindest erste Stichleitung 108 in eine offene Leitung transformieren. Für das Signal mit der Grundfrequenz könnte die zumindest erste Stichleitung 108 vernachlässigt werden. Die zumindest erste Stichleitung 108, die auf eine offene Leitung für das Signal der Grundfrequenz transformiert, kann keinen oder einen vernachlässigbar kleinen Leistungsverlust für das Signal der Grundfrequenz bewirken. Dadurch könnte das Signal mit der Grundfrequenz ausgehend vom ersten Zweig am ersten Anschluss 101 einen ersten gemeinsamen Knoten 107 der zumindest ersten Struktur 106 und der zumindest ersten Stichleitung 108 ohne (oder mit vernachlässigbar kleinem) Leistungsverlust erreichen. Wird eine weitere Schaltung mit dem gemeinsamen Knoten 107 der Diplexer-Schaltung verbunden, so kann die (vorwiegend) gesamte Leistung ausgehend von dem ersten Zweig am ersten Anschluss 101 in den Eingang der Schaltung gekoppelt werden.

Für ein Signal mit der im Wesentlichen doppelten Grundfrequenz (2f₀) kann der Leitungsabschnitt (mit der zumindest ersten Struktur 106 und ersten Stichleitung 108) am Knoten 109 am zweiten Anschluss des 180°-Hybridkopplers in eine offene Leitung transformieren, da die zumindest erste Struktur 106 effektiv eine im Wesentlichen 90°-Phasenverschiebung und die zumindest erste Stichleitung 108 effektiv eine im Wesentlichen 180°-Phasenverschiebung für das Signal mit der doppelten Grundfrequenz bewirken kann. Der Leitungsabschnitt an Knoten 109 kann für das Signal mit der doppelten Grundfrequenz vernachlässigt werden, da die zumindest erste Stichleitung 108 bei der doppelten Grundfrequenz an Knoten 107 in einen Kurzschluss transformieren kann. Aufgrund des offenen Leitungsabschnitts an Knoten 109 könnte zum Beispiel das Signal mit der doppelten Grundfrequenz in einen weiteren (z.B. dritten) Anschluss 103 des 180°-Hybridkopplers eingekoppelt und zum ersten Anschluss übertragen werden, ohne einen (oder nur einen vernachlässigbar kleinen) Leistungsverlust durch den Leitungsabschnitt (mit der zumindest ersten Struktur 106 und Stichleitung 108) an Knoten 109 zu erfahren.

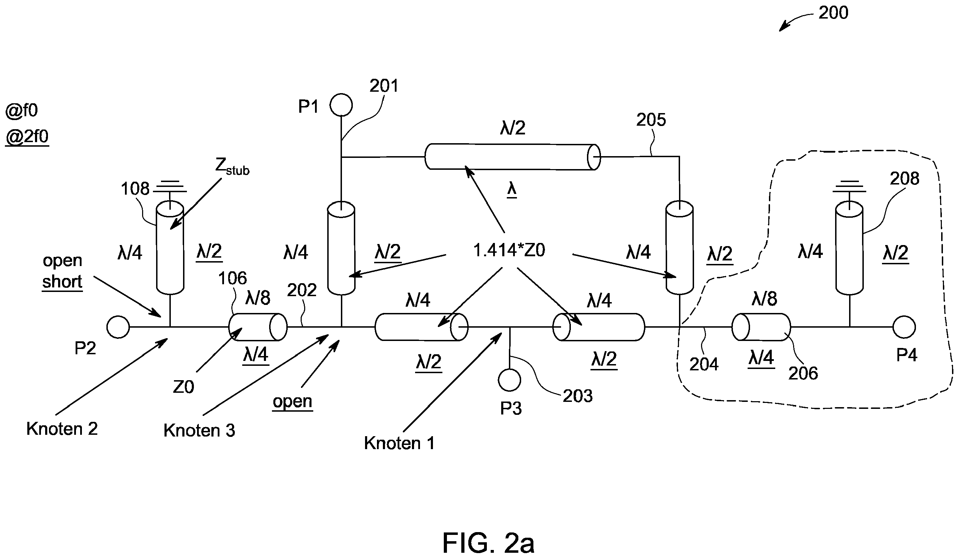

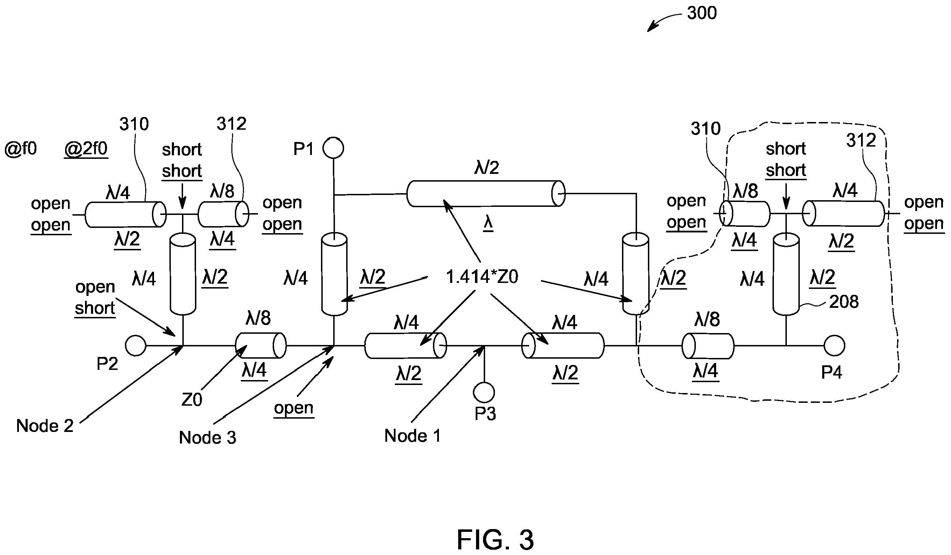

Der 180°-Hybridkoppler 105 (oder Rat-Race-Koppler oder Ringkoppler) kann insgesamt vier Anschlüsse aufweisen. Ein im 180°-Hybridkoppler übertragenes Signal kann in Abhängigkeit von der Länge zwischen den Anschlüssen und der Frequenz des Signals eine bestimmte Phasenverschiebung erfahren. Weitere Ausführungen zu den Anschlüssen und den Phasenverschiebungen in Bezug auf das Signal mit der Grundfrequenz und das Signal mit der im Wesentlichen doppelten Grundfrequenz werden im Zusammenhang mit Fig. 2a und 3 genauer beschrieben.

Das Signal mit der Grundfrequenz f₀ kann z.B. ein Empfangssignal von einem Sender eines Radarsystems sein. Eine an den ersten Anschluss 101 gekoppelte Antenne könnte das Signal mit der Grundfrequenz vom Sender empfangen. Die an den ersten Anschluss 101 gekoppelte Antenne könnte das Signal mit der doppelten Grundfrequenz an das Radarsystem als Antwort senden. Das Signal mit der Grundfrequenz als Empfangssignal und das Signal mit der im Wesentlichen doppelten Grundfrequenz als Sendesignal kann eine mögliche Anwendung der Diplexer-Schaltung z.B. für einen harmonischen Transponder darstellen. Gemäß einem anderen Beispiel könnte die Diplexer-Schaltung in entgegengesetzter Richtung verwendet werden oder bei der Grundfrequenz und der doppelten Grundfrequenz gleichzeitig senden oder empfangen.

Die zumindest erste Struktur 106 kann z.B. eine Leitung mit abgestimmter Länge sein, die durch eine Signalverzögerung eine Phasenverschiebung bewirken kann. Nach dem Passieren der ersten Struktur kann das Signal die Länge der zumindest ersten Struktur (einmal vollständig) zurückgelegt haben. Ein Ende der zumindest ersten Struktur 106 kann mit dem zweiten Anschluss 102 und das andere Ende der zumindest ersten Struktur 106 kann mit der zumindest ersten Stichleitung 108 gekoppelt sein (nachgeschaltete erste Struktur).

Die zumindest erste Stichleitung (engl. stub) kann z.B. eine parallel geschaltete Leitung mit abgestimmter Länge sein, die durch eine Signalverzögerung eine Phasenverschiebung bewirken kann. Nach dem Passieren der zumindest ersten Stichleitung 108 kann das Signal die Länge der zumindest ersten Stichleitung (einmal vollständig) zurückgelegt haben.

Die zumindest erste Stichleitung 108 kann in Abhängigkeit von der Frequenz des anliegenden Signals eine kurzgeschlossene oder offene Leitung darstellen. Die Transformation an der ersten Stichleitung könnte wie folgt betrachtet werden: Zum Beispiel kann das Signal mit der Grundfrequenz vom gemeinsamen Knoten 107 in Richtung der zumindest ersten Stichleitung 108 verlaufen, diese ein erstes Mal Passieren (90°-Phasenverschiebung), am Leitungsende mit dem Multiplikationsfaktor -1 reflektiert werden und die zumindest erste Stichleitung 108 ein zweites Mal Passieren (insgesamt effektiv 0°-Phasenverschiebung). Das vom gemeinsamen Knoten 107 in Richtung der zumindest ersten Stichleitung 108 hinlaufende Signal kann sich mit dem um 0° phasenverschobenen (reflektierte) Signal konstruktiv überlagern. Dies kann zu einer Transformation in eine offene erste Stichleitung 108 führen, die keinen oder nur einen kleinen Einfluss auf die Leistung des Signals bei der Grundfrequenz haben kann. Die zumindest erste Stichleitung 108 kann für das Signal mit der doppelten Grundfrequenz einen Kurzschluss darstellen, da es zu einer destruktiven Überlagerung des hinlaufenden und um 180° phasenverschobenen, reflektierten Signals kommen kann. Die Transformation am Knoten 109 kann ähnlich unter Berücksichtigung der zumindest ersten Struktur 106 und der damit vorliegenden Phasenverschiebung für jeweils die Grundfrequenz und doppelte Grundfrequenz erfolgen.

Es ist zu verstehen, dass die Formulierung "im Wesentlichen" in Bezug auf die Phasenverschiebungen eine akzeptable Abweichung von der konkret angegebenen Phasenverschiebung zulassen kann. Die Abweichung kann im Rahmen der zulässigen Toleranzbereiche in Bezug auf die Herstellung der einzelnen Komponenten, wie z.B. der Leitungsabschnitte oder des 180°-Hybridkopplers liegen. Zum Beispiel kann eine relative Abweichung von bis zu 1,0% von der vorliegenden Phasenverschiebung oder eine absolute Abweichung von bis zu +/- 1,0°, bis zu +/- 2,0°, bis zu +/- 3,0°, bis zu +/- 4,0°, bis zu +/- 5,0°, bis zu +/- 6,0°, bis zu +/- 7,0°, bis zu +/- 8,0°, bis zu +/- 9,0° oder bis zu +/- 10,0° von der vorliegenden Phasenverschiebung umfassen.

Weitere Einzelheiten und optionale Aspekte der Diplexer-Schaltung 100 sind in Verbindung mit dem vorgeschlagenen Konzept oder einem oder mehreren der im Folgenden beschriebenen Beispiele beschrieben. In den nachfolgenden Ausführungsbeispielen wird die Diplexer-Schaltung in Verbindung mit einem Frequenzverdoppler beschrieben. Es ist zu verstehen, dass die Diplexer-Schaltung unabhängig vom Frequenzverdoppler implementiert werden kann. Ausführungsbeispiele von Diplexer-Schaltungen können in Verbindung mit dem Frequenzverdoppler beschrieben sein, um eine mögliche Anwendung der Diplexer-Schaltung beispielhaft näher auszuführen.

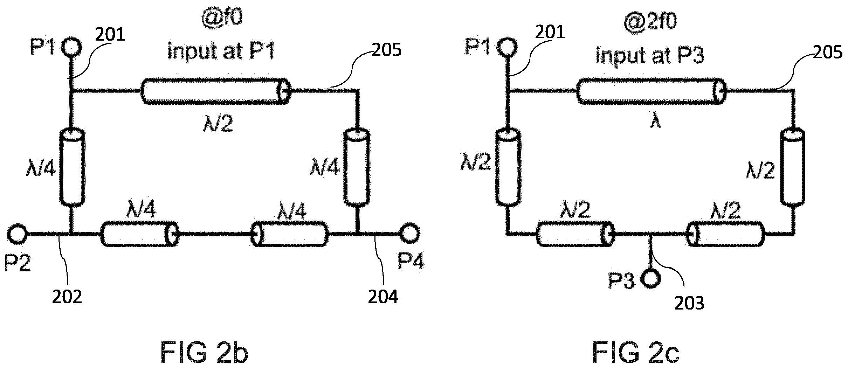

Fig. 2 zeigt ein weiteres Ausführungsbeispiel einer Diplexer-Schaltung 200. Die Diplexer-Schaltung 200 kann ähnlich wie die Diplexer-Schaltung 100, die in Verbindung mit Fig. 1 beschrieben wurde, implementiert sein. Die Diplexer-Schaltung 200 weist einen 180°-Hybridkoppler 205 mit vier Anschlüssen 201-204 auf. Die jeweiligen Abschnitte zwischen den Anschlüssen können eine Phasenverschiebung in Abhängigkeit der Frequenz des vorliegenden Signals bewirken. Für eine Unterscheidbarkeit zwischen der Grundfrequenz und der doppelten Grundfrequenz, beziehen sich nicht-unterstrichene (einfache) Kennzeichnungen auf die Grundfrequenz f₀ und unterstrichene Kennzeichnungen auf die doppelte Grundfrequenz 2f₀.

Die vier Anschlüsse 201-204 des 180°-Hybridkopplers 205 der Diplexer-Schaltung 200 können wie folgt bestimmt sein:
Der erste Anschluss 201 und der zweite Anschluss 202 können benachbart sein und das Signal mit der Grundfrequenz kann zwischen dem ersten Anschluss 201 und dem zweiten Anschluss 202 eine im Wesentlichen 90°-Phasenverschiebung erfahren.

Der zweite Anschluss 202 und der dritte Anschluss 203 können benachbart sein und das Signal mit der Grundfrequenz kann zwischen dem ersten Anschluss 201 und dem dritten Anschluss 203 eine im Wesentlichen 180°-Phasenverschiebung erfahren.

Der erste Anschluss 201 und der vierte Anschluss 204 können benachbart sein und das Signal mit der Grundfrequenz kann zwischen dem ersten Anschluss 201 und dem vierten Anschluss 204 eine im Wesentlichen 270°-Phasenverschiebung erfahren.

Das Signal mit der Grundfrequenz kann am ersten Anschluss 201 (P1) in zwei Richtungen im 180°-Hybridkoppler 205 verzweigen. Gemäß dem vorgeschlagenen Konzept kann das Signal mit der Grundfrequenz von Anschluss P1 zu Anschluss P2 (nahezu verlustfrei) übertragen werden. Im Vergleich zum Signal an Anschluss P1 kann das Signal an Anschluss P2 eine Phasenverschiebung von λ/4 + λ/8 aufweisen (die Stichleitung 108 kann vernachlässigt werden). Das Signal mit der Grundfrequenz kann von dem ersten Anschluss 201 über den ersten Zweig zum dritten Anschluss 203 mit einer Phasenverschiebung von λ/4 + λ/4 übertragen werden. Das Signal mit der Grundfrequenz kann von dem ersten Anschluss 201 über den zweiten Zweig zum dritten Anschluss 203 mit einer Phasenverschiebung von λ/2 + λ/4 + λ/4 übertragen werden. Durch die Überlagerung der beiden um 180°-phasenverschobenen Signale kann der Anschluss 203 (P3) für die Grundfrequenz entkoppeln, da an "Knoten 1" die Signalanteile von P1 kommend sich destruktiv auslöschen können. Die Entkopplung von dem dritten Anschluss 203, die für die Grundfrequenz vorliegen kann, ist in Fig. 2b im Rahmen einer vereinfachten Schaltung dargestellt.

Durch den zusätzlichen λ/2-Abschnitt im zweiten Zweig des 180°-Hybridkopplers 205 kann entsprechend eine 180°-Phasenverschiebung am vierten Anschluss 204 in Bezug auf das Signal in "Knoten 3" vorliegen. Wie mit den gestrichelten Linien in Fig. 2 angedeutet, kann die Diplexer-Schaltung 200 optional eine zweite Struktur 206 und zweite Stichleitung 208 aufweisen, die an den vierten Anschluss 204 koppeln. An der Diplexer-Schaltung 200 kann über die Anschlüsse P2 und P4 ein differentielles Signal (mit Phasendifferenz von 180°) abgegriffen werden. Die zweite Struktur 206 kann ähnlich wie die zumindest erste Struktur 106 und die zweite Stichleitung 208 kann ähnlich wie die zumindest erste Stichleitung 108 implementiert sein. Die zweite Struktur 206 kann an den vierten Anschluss 204 des 180°-Hybridkopplers 205 gekoppelt sein. Das Signal mit der Grundfrequenz kann nach Passieren der zweiten Struktur 206 effektiv eine im Wesentlichen 45°-Phasenverschiebung erfahren. Die zweite Stichleitung 208 kann der zweiten Struktur 206 nachgeschaltet sein. Das Signal mit der Grundfrequenz kann nach Passieren der zweiten Stichleitung 208 effektiv eine im Wesentlichen 90°-Phasenverschiebung erfahren.

Wie zuvor beschrieben, können die zumindest erste Stichleitung 108 und die zumindest erste Struktur 106 einen gemeinsamen Knoten ("Knoten 2") aufweisen. Der gemeinsamen Knoten (oder Anschluss P2) kann ein Signal mit einer im Wesentlichen doppelten Grundfrequenz koppeln. Zum Beispiel kann der Anschluss P2 an eine Schaltung koppeln, die basierend auf dem in P2 anliegenden Signal mit der Grundfrequenz ein Signal mit der im Wesentlichen doppelten Grundfrequenz generieren kann. Zum Beispiel kann Anschluss P2 an einen (ersten) Eingang eines Frequenzverdopplers koppeln. Optional kann die zweite Stichleitung 206 und die zweite Struktur 208 einen gemeinsamen Knoten zum Koppeln mit einem Signal mit einer im Wesentlichen doppelten Grundfrequenz aufweisen. Zum Beispiel kann der Anschluss P4 an einen zweiten Eingang des Frequenzverdopplers koppeln.

Der dritte Anschluss 203 des 180°-Hybridkopplers 205 kann eine Übertragung eines Signals mit der im Wesentlichen doppelten Grundfrequenz ermöglichen. Zum Beispiel kann das Signal mit der doppelten Grundfrequenz, welches vom Frequenzverdoppler generiert wurde, zum dritten Anschluss 203 übertagen werden. Der Ausgang der Frequenzverdoppler-Schaltung kann eine einzelne Leitung aufweisen, die an den dritten Anschluss 203 angeschlossen werden kann. Die Frequenzverdoppler-Schaltung mit zwei Eingängen (differentieller Eingang) und einer einfachen Leitung am Ausgang kann z.B. ein Push-Pull-Frequenzverdoppler sein.

Das Signal mit der doppelten Grundfrequenz kann von dem dritten Anschluss 203 zum ersten Anschluss 201 über den ersten und zweiten Zweig des 180°-Hybridkopplers 205 übertragen werden. Somit könnte mit einer an den ersten Anschluss 201 gekoppelten Antenne, die das Signal mit der Grundfrequenz empfangen kann, auch das Signal mit der doppelten Grundfrequenz wieder abgestrahlt werden.

Ausgehend vom dritten Anschluss203 kann das Signal mit der doppelten Grundfrequenz über den ersten Zweig (Zweig am zweiten Anschluss 202), eine Phasenverschiebung von λ/2 + λ/2 erfahren. Über den zweiten Zweig (Zweig am vierten Anschluss 204) kann das Signal mit der Grundfrequenz eine Phasenverschiebung von λ/2 + λ/2 + λ erfahren. Das Signal am ersten Anschluss 201 kann eine konstruktive Überlagerung der beiden phasenverschobenen Teilsignale sein. Die beiden Teilsignale können (nahezu) verlustfrei vom dritten zum ersten Anschluss übertragen werden, da die Leitungsabschnitte am dritten und vierten Anschluss 203, 204, welche jeweils die Struktur 106, 206 und die Stichleitung 108, 208 umfassen, für die doppelte Grundfrequenz jeweils in eine offene Leitung transformiert. Dieser Aspekt hinsichtlich der offenen Leitungen am zweiten und vierten Anschluss 202, 204 ist in Fig. 2c vereinfacht dargestellt. Somit kann gemäß dem vorgeschlagenen Konzept die Diplexer-Schaltung 200 ermöglichen, mit einem Anschluss das Signal mit der Grundfrequenz zu empfangen und/oder das Signal der doppelten Grundfrequenz zu senden und/oder umgekehrt. Gemäß einem weiteren Beispiel könnte die Diplexer-Schaltung nur mit der Grundfrequenz und/oder der doppelten Grundfrequenz betrieben werden.

Für eine geeignete Transformation der Stichleitungen in Abhängigkeit der vorliegenden Frequenz kann, wie in Fig. 2 beispielhaft dargestellt, ein Ende der zumindest ersten Stichleitung 108 (und/oder der zweiten Stichleitung 208) auf Massepotential liegen. Das Massepotential kann eine Reflektion des Signals am Ende der Stichleitung 108, 208 bewirken. Durch die Reflektion kann das Signal die Stichleitung 108, 208 ein zweites Mal passieren, wodurch eine zusätzliche Phasenverschiebung erreicht werden kann. Je nach anliegender Frequenz kann sich das in die Stichleitung hineinlaufenden Signal mit dem reflektierten Signal konstruktiv oder destruktiv überlagern (kurgeschlossene oder offene Leitung).

Weitere Einzelheiten und optionale Aspekte der Diplexer-Schaltung 200 sind in Verbindung mit dem vorgeschlagenen Konzept oder einem oder mehreren der vorherigen oder im Folgenden beschriebenen Beispiele beschrieben.

Alternativ zum Massepotential, das in Verbindung mit Fig. 2 beispielhaft beschrieben wurde, kann die gewünschte Transformation auch durch zwei Stichleitungen erreicht werden. Fig. 3 zeigt ein weiteres Ausführungsbeispiel einer Diplexer-Schaltung 300, die ähnlich wie die Diplexer-Schaltung 200, welche in Verbindung mit Fig. 2 beschrieben wurde, implementiert sein kann. Wie in Fig. 3 gezeigt, verzweigt die zumindest erste Stichleitung 108 in eine dritte Stichleitung 310 und eine vierte Stichleitung 312. Das Signal mit der Grundfrequenz erfährt nach Passieren der dritten Stichleitung 310 effektiv eine im Wesentlichen 90°-Phasenverschiebung und nach Passieren der vierten Stichleitung 312 effektiv eine im Wesentlichen 45°-Phasenverschiebung. Mittels der dritten und vierten Stichleitung 310, 312 kann die gewünschte Transformation für die jeweilige Frequenz auch ohne einen Kurzschluss realisieren werden. Durch die zwei "offenen" Leitungen der dritten und vierten Stichleitung 310, 312 kann ein virtueller Kurzschluss am Ende der ersten Stichleitung 108 erzeugt werden. Die gewünschte Transformation könnte mit der dritten und vierten Stichleitung 310, 312 für höhere Grundfrequenzen technisch einfacher realisiert werden. Analog könnten weitere Stichleitungen auch am Ende der zweiten Stichleitung 208 alternativ zum Massepotential verwendet werden. Das Ende der zweiten Stichleitung 208 kann ähnlich wie oder anders als das Ende der ersten Stichleitung 108 implementiert sein.

Weitere Einzelheiten und optionale Aspekte der Diplexer-Schaltung 300 sind in Verbindung mit dem vorgeschlagenen Konzept oder einem oder mehreren der vorherigen oder im Folgenden beschriebenen Beispiele beschrieben. Nachfolgend werden mögliche Anwendungen und Netzwerke von Diplexer-Schaltungen beispielhaft näher ausgeführt.

Eine der vorhergehend beschriebenen Diplexer-Schaltungen kann verwendet werden, um einen monostatischen, harmonischen Transponder implementieren zu können.

Gemäß einem Ausführungsbeispiel umfasst ein harmonischer Transponder eine Diplexer-Schaltung. Der erste Anschluss der Diplexer-Schaltung kann zum Empfangen des Signals mit der Grundfrequenz und zum Senden des Signals mit der im Wesentlichen doppelten Grundfrequenz ausgebildet sein. Der harmonische Transponder kann weitere Komponenten wie z.B. eine Antenne und einen Frequenzverdoppler umfassen und in Verbindung mit einem Radarsystem verwendet werden.

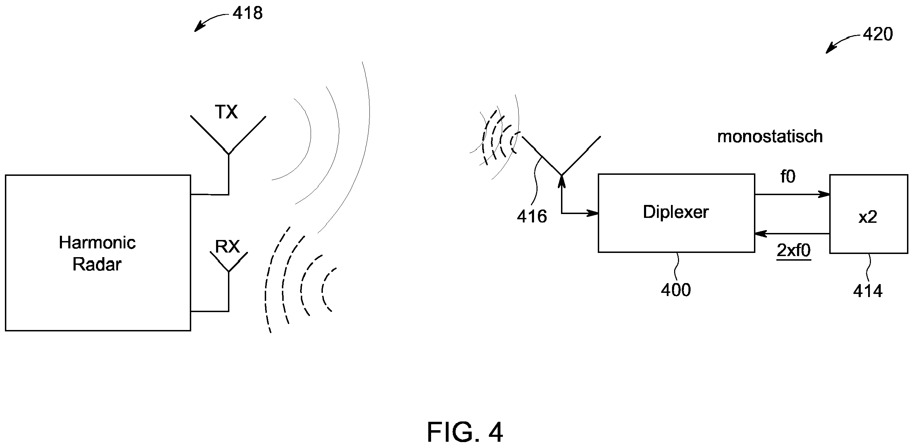

Fig. 4 zeigt ein Ausführungsbeispiel eines harmonischen Transponders 420 der in Verbindung mit einem Radarsystem 418 zum Beispiel zur Entfernungsmessung verwendet werden kann (harmonisches Radar). Das Radarsystem 418 kann ein Sendesignal TX mit der Grundfrequenz f₀ in Richtung des harmonischen Transponders 420 senden. Der harmonische Transponder 420 umfasst eine Diplexer-Schaltung 400 gemäß dem vorgeschlagenen Konzept, eine Antenne 416 und einen Frequenzverdoppler 414. Die Antenne 416 kann zum Beispiel mit dem ersten Anschluss der Diplexer-Schaltung 400 gekoppelt sein und das Sendesignal vom Radarsystem an die Diplexer-Schaltung 400 übertragen. Der Frequenzverdoppler 414 kann über den (oder die) gemeinsamen Knoten an der zumindest ersten Struktur (und optional der zweiten Struktur) das Signal mit der Grundfrequenz empfangen und basierend auf dem Signal mit der Grundfrequenz das Signal mit der im Wesentlichen doppelten Grundfrequenz generieren. Ein Ausgang des Frequenzverdopplers 414 kann an den dritten Anschluss der Diplexer-Schaltung 400 koppelt sein. Dadurch kann das Signal mit der doppelten Grundfrequenz in die Diplexer-Schaltung 400 eingekoppelt und zum ersten Anschluss übertragen werden. Die Antenne 416 kann das Signal mit der doppelten Grundfrequenz (2. Harmonische) an das Radarsystem 418 senden. Somit kann der harmonische Transponder 420 mit einer Antenne 416 betrieben werden.

Im Vergleich zu einem bistatischen harmonischen Transponder könnte die Entfernungsbestimmung mit dem monostatischen harmonischen Transponder 420 genauer erfolgen, da das Senden und Empfangen über die gleiche Antenne erfolgen kann. Bei dem monostatischen Transponder 420 mit einer Antenne 416, die von der Grundfrequenz (f₀) und der harmonischen Frequenz (2f₀) geteilt wird, kann das Phasenzentrum der gemeinsamen Antenne 416 als klares Zentrum definiert werden. Eine Laufzeitverzögerung und ein damit verbundener Entfernungsfehler, der in der Diplexer-Schaltung entstehen könnte, kann orientierungs-unabhängig sein und somit herauskalibriert oder korrigiert werden.

Weitere Einzelheiten und optionale Aspekte der Diplexer-Schaltung 400 sind in Verbindung mit dem vorgeschlagenen Konzept oder einem oder mehreren der vorhergehenden oder im Folgenden beschriebenen Beispiele beschrieben.

Mehrere harmonische Transponder könnten ein Netzwerk bilden, die als ein retrodirektiver harmonischer Reflektor betrieben werden kann.

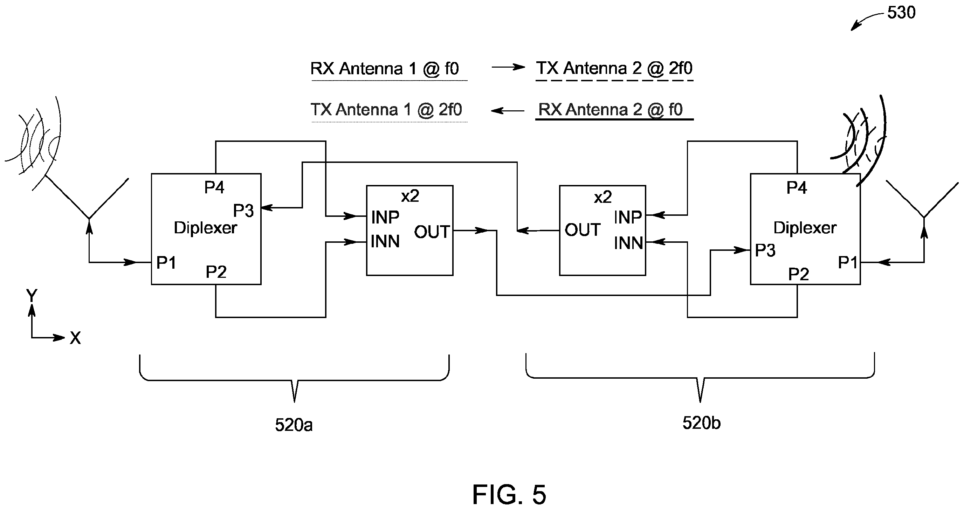

Fig. 5 zeigt ein Ausführungsbeispiel eines retrodirektiven Systems 530. Das retrodirektive System 530 umfasst einen ersten harmonischen Transponder 520a gemäß dem vorgeschlagenen Konzept mit erster Diplexer-Schaltung und erstem Frequenzverdoppler und ferner einen zweiten harmonischen Transponder 520b gemäß dem vorgeschlagenen Konzept mit zweiter Diplexer-Schaltung und zweitem Frequenzverdoppler. Die harmonischen Transponder 520ab des retrodirektiven Systems 530 können jeweils ähnlich wie eines der harmonischen Transponder, die vorhergehend beispielhaft ausgeführt wurden, implementiert sein. Die harmonischen Transponder 520a-b können ähnlich wie die Antennenelemente eines Van-Atta-Array-Netzwerk verschaltet und betrieben werden. Dadurch kann das harmonische Radarsignal zum Radarsystem zurückreflektiert werden. Dies ist für das harmonische Radar mithilfe der vorgeschlagenen Diplexer möglich:

Wie in Fig. 5 gezeigt, ist ein Ausgang des ersten Frequenzverdopplers an den dritten Anschluss der zweiten Diplexer-Schaltung und ein Ausgang des zweiten Frequenzverdopplers an den dritten Anschluss der ersten Diplexer-Schaltung koppelt. Das retrodirektive System 530 kann ein Netzwerk mit einer 2x1-Array-Anordnung darstellen. Zum Beispiel können die beiden harmonischen Transponder 520a-b entlang der x-Richtung nebeneinander angeordnet werden. Durch die Kopplung des Diplexers an den differentiellen Eingang des Frequenzverdopplers und die Kopplung des Ausgangs des Frequenzverdopplers mit der gegenüberliegenden Antenne (über die zweite Diplexer-Schaltung) kann eine retrodirektive Eigenschaft in Bezug auf die x-Richtung erreicht werden. Wird zum Beispiel das Signal mit der Grundfrequenz von einer ersten Richtung über die Antennen empfangen, so können die überlagerten Signale der Antennen bei der doppelten Grundfrequenz entgegengesetzt zur ersten Richtung zurücksenden. Im Vergleich zu einem (einzelnen) harmonischen Transponder kann das retrodirektive System 530 einen höheren Rückstreuquerschnitt aufweisen. Das 2x1-Netzwerk (oder 1x2 Netzwerk z.B. für eine Anordnung entlang der y-Richtung) kann als ein eindimensionales Basiselement betrachtet werden.

Zum Beispiel kann ein eindimensional retrodirektives System mit mehr als zwei harmonischen Transpondern, wie z.B. mit vier, sechs, acht oder allgemein mit einem Ganzzahligen Vielfachen von zwei, erreicht werden. Die harmonischen Transponder können entlang einer Geraden (z.B. in x- oder y-Richtung) angeordnet werden und ein gemeinsames Zentrum auf der Geraden aufweisen. Gegenüberliegend angeordnete harmonische Transponder, können ein Transponderpaar (Basiselement) bilden, und derart gekoppelt sein, dass eine gleiche Phasenverschiebung für jedes Transponderpaar erreicht werden kann. Dadurch kann ein eindimensional retrodirektives System mit mehr als zwei harmonischen Transpondern implementiert werden.

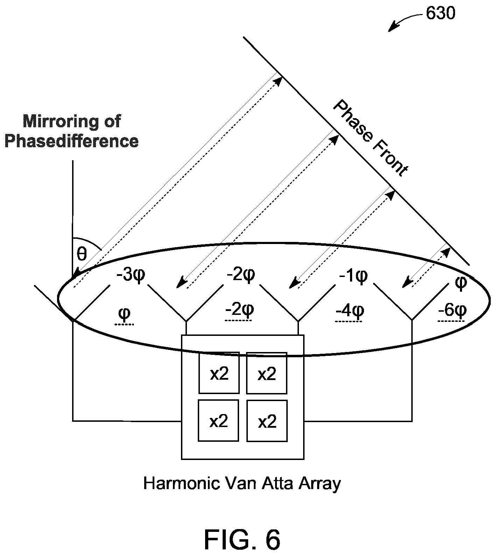

Fig. 6 zeigt ein eindimensional retrodirektives System 630 mit vier Antennenelementen, die in einer Reihe angeordnet sind. Mit der vorgeschlagenen Kopplungsweise können die Antennenelemente derart verbunden werden, dass die Phasendifferenz benachbarter Elemente beim Zurücksenden (in Bezug auf die Phasendifferenz eines Netzwerks mit einer herkömmlichen Aneinanderreihung von Antennenelementen) gespiegelt ist (Van-Atta-Array). Das in Fig. 6 gezeigte retrodirektive System 630 kann im Vergleich zu einem einzelnen Basiselement einen größeren Rückstreuquerschnitt haben.

Ein in zwei Dimensionen retrodirektives System (z.B. x- und y-Richtung) kann zum Beispiel mit einem eindimensional retrodirektiven System, die mit einer dielektrischen Linse gekoppelt ist, erreicht werden. Gemäß einem anderen Beispiel kann ein zweidimensional retrodirektives System mit vier harmonischen Transpondern erreicht werden.

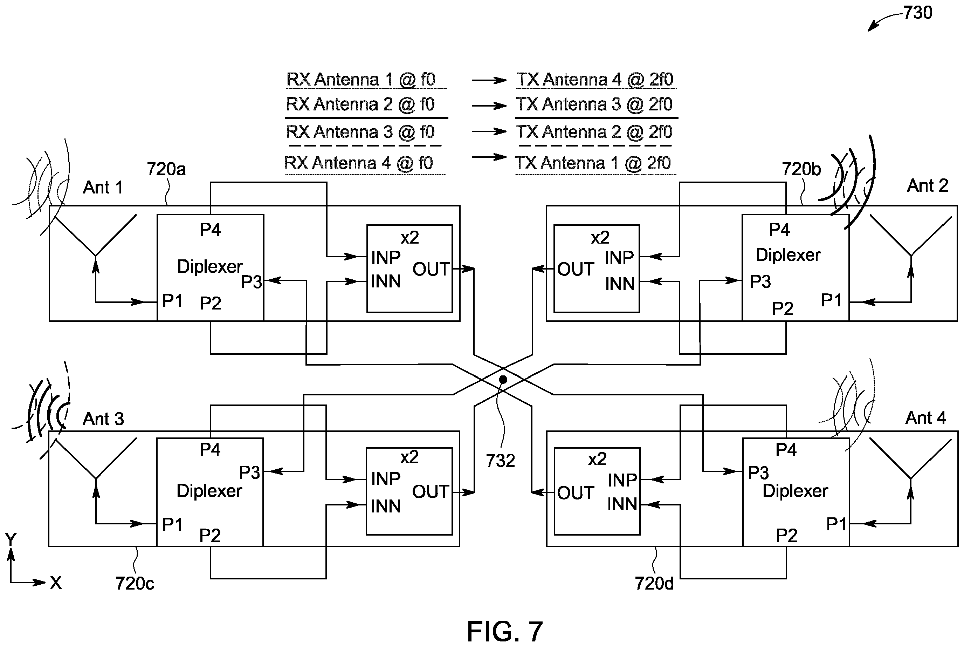

Fig. 7 zeigt ein weiteres Ausführungsbeispiel eines retrodirektiven Systems 730. Das retrodirektive System 730 umfasst insgesamt vier harmonische Transponder 720a-d, die z.B. ähnlich wie die harmonischen Transponder, die in Zusammenhang mit Fig. 5 beschrieben wurden, implementiert sein können. Die harmonischen Transponder 720a-d des retrodirektiven Systems 730 weisen ein gemeinsames Zentrum 732 auf. Bezüglich des Zentrums 732 (diagonal) gegenüberliegend angeordnete harmonische Transponder sind über eine gleiche Länge gekoppelt. Durch die gleiche Kopplungslänge kann eine gleiche Phasenverschiebung für jedes Transponderpaar erreicht werden. Gemäß einem anderen Beispiel könnten die Transponderpaare unterschiedliche Kopplungslängen aufweisen, sofern die Phasenverschiebung effektiv (z.B. durch eine Verlängerung um ein Vielfaches von λ) jeweils für die Transponderpaare gleich sein kann.

Wie in Fig. 7 gezeigt, ist jeweils ein Ausgang eines jeden Frequenzverdopplers an den dritten Anschluss der diagonal gegenüberliegend angeordneten Diplexer-Schaltung koppelt. Dadurch kann ein zweidimensional retrodirektives System erreicht werden. Das in Fig. 7 gezeigte retrodirektive System 730 kann als ein zweidimensionales Basiselement betrachtet werden. Das Basiselement könnte mit einer dielektrischen Linse gekoppelt werden, um z.B. das Sendesignal über eine größere Entfernung übertragen zu können. Das Basiselement kann mit weiteren Basiselemente gekoppelt werden. Mehrere zweidimensionale Basiselemente, die z.B. jeweils wie in Fig. 6 miteinander gekoppelt sein können, können ein größeres zweidimensional retrodirektives Netzwerk bilden. Ein größeres Netzwerk kann einen größeren Rückstreuquerschnitt haben.

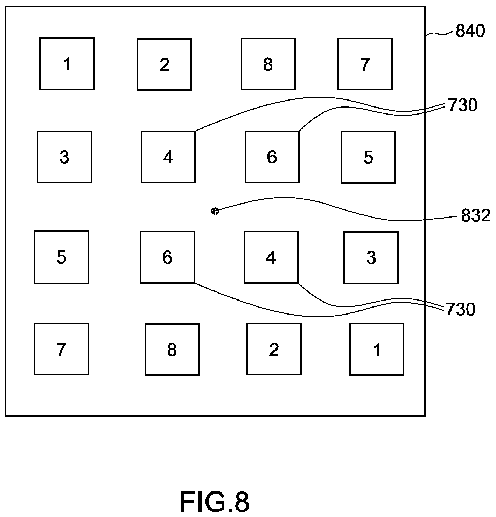

Zum Beispiel kann ein zweidimensional retrodirektives System mit mehr als vier harmonischen Transpondern, wie z.B. sechzehn harmonischen Transpondern erreicht werden. Fig. 8 zeigt ein System 840 mit einer Kopplung von gegenüberliegend angeordneten harmonischen Transpondern, die jeweils ein zweidimensionales Basiselement (z.B. retrodirektives System 730) bilden. Jedes zweidimensionale Basiselement der insgesamt vier Basiselemente weisen ein gemeinsames Zentrum auf. Die gemeinsamen Zentren des jeweiligen Basiselements sind das gemeinsame Zentrum 832 des gesamten Netzwerks 840. Allgemein könnte ein zweidimensional retrodirektives System mit einer Mehrzahl von zweidimensionalen Basiselementen erreicht werden, indem das gemeinsame Zentrum der jeweiligen zweidimensionalen Basiselemente das gemeinsames Zentrum 832 der Mehrzahl von zweidimensionalen Basiselemente ist. Dadurch kann ein zweidimensional retrodirektives System mit einem größeren Rückstreuquerschnitt erreicht werden.

Zum Beispiel können mehrere harmonische Transponder, eindimensionale Basiselemente, zweidimensionale Basiselemente oder retrodirektive Systeme gemäß einem der vorhergehend beschriebenen Beispiele auf einer gemeinsamen Leiterplatte, auf einem gemeinsamen Substrat oder in einem gemeinsamen Chipgehäuse kompakter implementiert werden.

Die Aspekte und Merkmale, die im Zusammenhang mit einem bestimmten der vorherigen Beispiele beschrieben sind, können auch mit einem oder mehreren der weiteren Beispiele kombiniert werden, um ein identisches oder ähnliches Merkmal dieses weiteren Beispiels zu ersetzen oder um das Merkmal in das weitere Beispiel zusätzlich einzuführen.

Es versteht sich ferner, dass die Offenbarung mehrerer, in der Beschreibung oder den Ansprüchen offenbarter Schritte, Prozesse, Operationen oder Funktionen nicht als zwingend in der beschriebenen Reihenfolge befindlich ausgelegt werden soll, sofern dies nicht im Einzelfall explizit angegeben oder aus technischen Gründen zwingend erforderlich ist. Daher wird durch die vorhergehende Beschreibung die Durchführung von mehreren Schritten oder Funktionen nicht auf eine bestimmte Reihenfolge begrenzt. Ferner kann bei weiteren Beispielen ein einzelner Schritt, eine einzelne Funktion, ein einzelner Prozess oder eine einzelne Operation mehrere Teilschritte, -funktionen, -prozesse oder -operationen einschließen und/oder in dieselben aufgebrochen werden.

Wenn einige Aspekte in den vorhergehenden Abschnitten im Zusammenhang mit einer Vorrichtung oder einem System beschrieben wurden, sind diese Aspekte auch als eine Beschreibung des entsprechenden Verfahrens zu verstehen. Dabei kann beispielsweise ein Block, eine Vorrichtung oder ein funktionaler Aspekt der Vorrichtung oder des Systems einem Merkmal, etwa einem Verfahrensschritt, des entsprechenden Verfahrens entsprechen. Entsprechend dazu sind Aspekte, die im Zusammenhang mit einem Verfahren beschrieben werden, auch als eine Beschreibung eines entsprechenden Blocks, eines entsprechenden Elements, einer Eigenschaft oder eines funktionalen Merkmals einer entsprechenden Vorrichtung oder eines entsprechenden Systems zu verstehen.

Die folgenden Ansprüche werden hiermit in die detaillierte Beschreibung aufgenommen, wobei jeder Anspruch als getrenntes Beispiel für sich stehen kann. Ferner ist zu beachten, dass - obwohl ein abhängiger Anspruch sich in den Ansprüchen auf eine bestimmte Kombination mit einem oder mehreren anderen Ansprüchen bezieht - andere Beispiele auch eine Kombination des abhängigen Anspruchs mit dem Gegenstand jedes anderen abhängigen oder unabhängigen Anspruchs umfassen können. Solche Kombinationen werden hiermit explizit vorgeschlagen, sofern nicht im Einzelfall angegeben ist, dass eine bestimmte Kombination nicht beabsichtigt ist. Ferner sollen auch Merkmale eines Anspruchs für jeden anderen unabhängigen Anspruch eingeschlossen sein, selbst wenn dieser Anspruch nicht direkt als abhängig von diesem anderen unabhängigen Anspruch definiert ist.

## Patentansprüche

1. Eine Diplexer-Schaltung (100, 200, 300), umfassend:
einen 180°-Hybridkoppler (105) mit einem ersten Anschluss (101) zum Übertragen eines Signals mit einer Grundfrequenz;
zumindest eine erste Struktur (106), die an einen zweiten Anschluss (102) des 180°-Hybridkopplers (105) gekoppelt ist, wobei das Signal mit der Grundfrequenz nach Passieren der zumindest ersten Struktur (106) effektiv eine im Wesentlichen 45°-Phasenverschiebung erfährt; und
zumindest eine erste Stichleitung (108), die der ersten Struktur (106) nachgeschaltet ist, wobei das Signal mit der Grundfrequenz nach Passieren der ersten Stichleitung (108) effektiv eine im Wesentlichen 90°-Phasenverschiebung erfährt.

2. Die Diplexer-Schaltung (200) nach Anspruch 1, wobei
der erste Anschluss (201) und der zweite Anschluss (202) benachbart sind und das Signal mit der Grundfrequenz zwischen dem ersten Anschluss (201) und dem zweiten Anschluss (202) eine im Wesentlichen 90°-Phasenverschiebung erfährt.

3. Die Diplexer-Schaltung (200) nach Anspruch 1 oder 2, wobei
der 180°-Hybridkoppler (205) einen dritten Anschluss (203) zum Übertragen eines Signals mit einer im Wesentlichen doppelten Grundfrequenz aufweist.

4. Die Diplexer-Schaltung (200) nach Anspruch 3, wobei
der zweite Anschluss (202) und der dritte Anschluss (203) benachbart sind und das Signal mit der Grundfrequenz zwischen dem ersten Anschluss (201) und dem dritten Anschluss (203) eine im Wesentlichen 180°-Phasenverschiebung erfährt.

5. Die Diplexer-Schaltung (100) nach einem der vorhergehenden Ansprüche, wobei
die zumindest erste Stichleitung (108) und die zumindest erste Struktur (106) einen gemeinsamen Knoten (107) zum Koppeln mit einem Signal mit einer im Wesentlichen doppelten Grundfrequenz aufweisen.

6. Die Diplexer-Schaltung (200) nach einem der vorhergehenden Ansprüche, ferner umfassend:
eine zweite Struktur (206), die an einen vierten Anschluss (204) des 180°-Hybridkopplers gekoppelt ist, wobei das Signal mit der Grundfrequenz nach Passieren der zweiten Struktur (206) effektiv eine im Wesentlichen 45°-Phasenverschiebung erfährt; und
eine zweite Stichleitung (208), die der zweiten Struktur (206) nachgeschaltet ist, wobei das Signal mit der Grundfrequenz nach Passieren der zweiten Stichleitung (208) effektiv eine im Wesentlichen 90°-Phasenverschiebung erfährt.

7. Die Diplexer-Schaltung (200) nach Anspruch 6, wobei
der erste Anschluss (201) und der vierte Anschluss (204) benachbart sind und das Signal mit der Grundfrequenz zwischen dem ersten Anschluss (201) und dem vierten Anschluss (204) eine im Wesentlichen 270°-Phasenverschiebung erfährt.

8. Die Diplexer-Schaltung (200) nach Anspruch 6 oder 7, wobei
die zweite Stichleitung (208) und die zweite Struktur (206) einen gemeinsamen Knoten zum Koppeln mit einem Signal mit einer im Wesentlichen doppelten Grundfrequenz aufweisen.

9. Die Diplexer-Schaltung (200) nach einem der vorhergehenden Ansprüche, wobei
ein Ende der zumindest ersten Stichleitung (108) auf Massepotential liegt.

10. Die Diplexer-Schaltung (300) nach einem der Ansprüche 1 bis 8, wobei
die zumindest erste Stichleitung (108) in eine dritte Stichleitung (310) und eine vierte Stichleitung (312) verzweigt, wobei das Signal mit der Grundfrequenz nach Passieren der dritten Stichleitung (310) effektiv eine im Wesentlichen 90°-Phasenverschiebung und nach Passieren der vierten Stichleitung (312) effektiv eine im Wesentlichen 45°-Phasenverschiebung erfährt.

11. Ein harmonischer Transponder (420, 520a-b, 720a-d), umfassend:
eine Diplexer-Schaltung (400) gemäß einem der Ansprüche 1 bis 10 mit dem ersten Anschluss zum Empfangen des Signals mit der Grundfrequenz und zum Senden eines Signals mit der im Wesentlichen doppelten Grundfrequenz.

12. Der harmonische Transponder (420) nach Anspruch 11, ferner umfassend:
einen Frequenzverdoppler (414), der zumindest über den gemeinsamen Knoten an der zumindest ersten Struktur das Signal mit der Grundfrequenz empfängt und basierend auf dem Signal mit der Grundfrequenz das Signal mit der im Wesentlichen doppelten Grundfrequenz generiert.

13. Der harmonische Transponder (420) nach Anspruch 12, wobei
ein Ausgang des Frequenzverdopplers (414) an den dritten Anschluss der Diplexer-Schaltung (400) koppelt.

14. Ein retrodirektives System (530, 630, 730), umfassend:
zumindest einen ersten harmonischen Transponder (520a) gemäß Anspruch 12 mit erster Diplexer-Schaltung und erstem Frequenzverdoppler; und
zumindest einen zweiten harmonischen Transponder (520b) gemäß Anspruch 12 mit zweiter Diplexer-Schaltung und zweitem Frequenzverdoppler.

15. Das retrodirektive System (530) nach Anspruch 14, wobei
ein Ausgang des ersten Frequenzverdopplers an den dritten Anschluss der zweiten Diplexer-Schaltung und ein Ausgang des zweiten Frequenzverdopplers an den dritten Anschluss der ersten Diplexer-Schaltung koppelt.

16. Das retrodirektive System (630, 730) nach Anspruch 14, ferner umfassend:
einen dritten und vierten harmonischen Transponder (720c-d) jeweils gemäß Anspruch 12, wobei
die harmonischen Transponder (720a-d) des retrodirektiven Systems (730) ein gemeinsames Zentrum (732) aufweisen, wobei bezüglich des Zentrums (732) gegenüberliegend angeordnete harmonische Transponder über eine gleiche Länge gekoppelt sind.

17. Das retrodirektive System (730) nach Anspruch 16, wobei
jeweils ein Ausgang eines jeden Frequenzverdopplers an den dritten Anschluss der diagonal gegenüberliegend angeordneten Diplexer-Schaltung koppelt.

18. Ein System (840), umfassend:
eine Mehrzahl von retrodirektiven Systemen (730) nach einem der Ansprüche 16 oder 17,
wobei das gemeinsame Zentrum (732) der jeweils retrodirektiven Systeme ein gemeinsames Zentrum (832) der Mehrzahl von retrodirektiven Systemen ist.

19. Das System (840) nach Anspruch 18, wobei
die harmonischen Transponder des Systems (840) auf einem gemeinsamen Träger implementiert sind.
